# FASCICULE DE BREVET EUROPEEN

(11) **EP 3 423 302 B1**
(45) Date de publication et mention de la délivrance du brevet: **08.04.2020**
(21) Numéro de dépôt: 17711713.2
(22) Date de dépôt: 28.02.2017
(51) Int. Cl.: B60N 2/815, B60N 2/818, B60N 2/894

(54) **APPUI-TÊTE DE SIÈGE DE VÉHICULE AUTOMOBILE**
KOPFSTÜTZE FÜR EINEN KRAFTFAHRZEUGSITZ
HEADREST FOR A MOTOR VEHICLE SEAT

(30) Priorité: 01.03.2016 FR 1651685
(43) Date de publication de la demande: 09.01.2019
(73) Titulaire: TESCA France, 75008 Paris (FR)
(72) Inventeur: GEORGES, Laurent, 08190 Roizy (FR); HERVE, Grégory, 35830 Betton (FR)
(74) Mandataire: Sayettat, Julien Christian
(86) Numéro de dépôt international: PCT/FR2017/050452
(87) Numéro de publication internationale: WO 2017/149241

(56) Documents cités:
- EP-A1- 2 660 100
- US-A1- 2012 235 460
- US-A1- 2014 327 288

## Description

L'invention concerne un appui-tête de siège de véhicule automobile.

Il est connu, de réaliser un appui-tête de siège de véhicule automobile, ledit appui-tête comprenant :
- deux tiges parallèles tubulaires métalliques de liaison au siège destinées à être montées en haut de dossier dudit siège, lesdites tiges étant sous forme de deux pièces distinctes, au moins l'une desdites tiges étant pourvue de crans de verrouillage,
- un boitier en matériau plastique moulé d'absorption d'énergie en cas de choc de la tête d'un passager sur ledit appui-tête, ledit boitier étant moulé d'une pièce, ledit boitier comprenant deux conduits de réception desdites tiges en coulissement,
- un coussin d'habillage dudit boitier pour recevoir en appui la tête d'un passager,
- deux jeux de paliers comprenant chacun un palier haut et un palier bas, chacun desdits jeux étant monté dans un conduit respectif par emboitement desdits paliers dans des logements prévus dans ledit boitier, lesdits logements étant agencés de manière à permettre un débattement transversal desdits paliers de part et d'autre d'une position nominale, lesdits paliers étant pourvus d'un orifice de réception en coulissement de la tige correspondante,
- un dispositif de verrouillage dudit boitier par rapport auxdites tiges selon une pluralité de positions verticales, de manière à permettre un réglage en hauteur dudit coussin, ledit dispositif comprenant au moins une saillie de verrouillage montée mobile par rapport audit boitier entre une position de verrouillage, où ladite saillie s'insère dans un desdits crans, et une position de déverrouillage, où ladite saillie se retire dudit cran afin de libérer la coulissement de la tige correspondante.

Le fait de mouler le boitier d'une pièce permet de limiter les risques de rupture dudit boitier qu'on peut observer lorsque ledit boitier est formé par deux demi-coques soudées l'une à l'autre.

Cependant, le fait de prévoir deux tiges distinctes présente divers inconvénients :
- la tenue mécanique de l'appui-tête est non satisfaisante dans la mesure où les tiges forment avec le boitier trois pièces distinctes susceptibles de micro-déplacements les unes par rapport aux autres ; du fait de la multiplication des degrés de liberté, on a une multiplication des sources de bruit liées aux vibrations des différentes pièces les unes par rapport aux autres,
- par ailleurs, le bon coulissement du boitier sur les tiges peut être entravé du fait de micro-déplacements d'une tige par rapport à l'autre pouvant créer des phénomènes d'arc-boutement,
- de ce fait, un tel agencement requiert de disposer de paliers de hauteur importante, pour assurer un bon guidage des tiges et contrecarrer les facteurs de mauvais coulissement sus-mentionnés, ce qui peut être incompatible avec l'espace disponible pour loger lesdits paliers.

L'invention a pour but de pallier ces inconvénients. Il est également connu du document US-A-2014/327288 un appui-tête selon le préambule de la revendication 1. Par rapport à ce document, le problème que la présente invention se propose de résoudre consiste à améliorer la tenue mécanique de l'appui-tête et le coulissement des tiges.

A cet effet, l'invention propose un appui-tête de siège de véhicule automobile, selon la revendication 1.

Dans cette description, les termes de positionnement dans l'espace (haut, bas, longitudinal, transversal, avant, vertical,...) sont pris en référence à un appui-tête monté dans le véhicule.

Avec l'agencement proposé, on observe les effets suivants :
- la tenue mécanique de l'appui-tête est améliorée de façon notoire dans la mesure où les tiges forment avec le boitier seulement deux pièces distinctes, ce qui restreint les degrés de liberté de l'ensemble ; on diminue ainsi les sources de bruit,
- par ailleurs, le coulissement des tiges est amélioré du fait que les tiges sont parfaitement positionnées l'une par rapport à l'autre au moyen de la partie centrale de l'armature en U, ce qui permet d'éviter les phénomènes de « mise en crabe » nuisibles au coulissement,
- de ce fait, un tel agencement permet de disposer de paliers de faible hauteur aisément logés dans le boitier.

D'autres particularités et avantages de l'invention apparaîtront dans la description qui suit, faite en référence aux figures jointes, dans lesquelles :

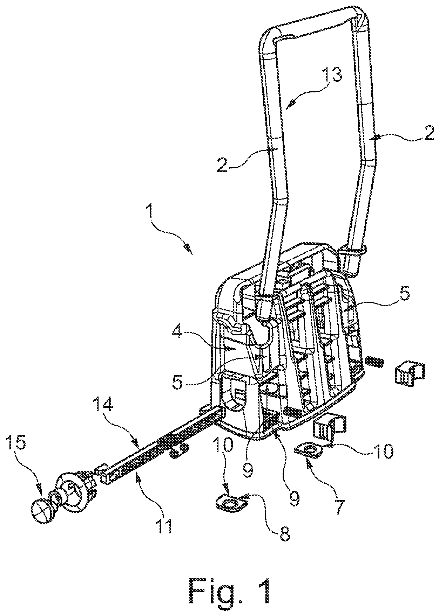

- la figure 1 est une vue éclatée en perspective partielle d'un appui-tête selon une réalisation,

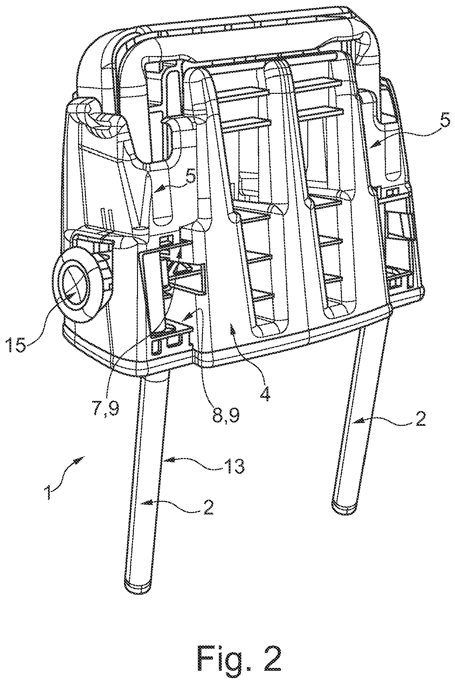

- la figure 2 est similaire à la figure 1, l'appui-tête étant assemblé,

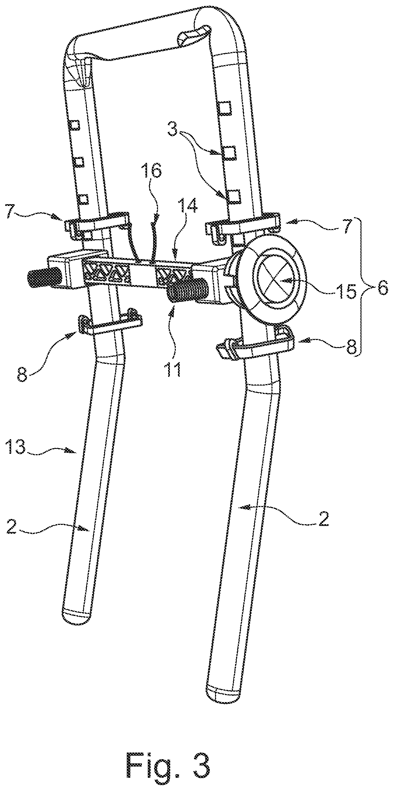

- la figure 3 est une vue en perspective de l'armature de l'appui-tête des figures précédentes pourvue du dispositif de verrouillage,

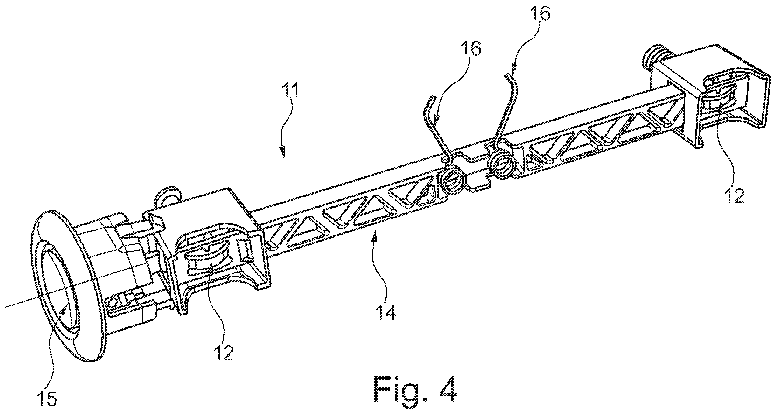

- la figure 4 est une vue en perspective de détail du dispositif de verrouillage de l'appui-tête des figures précédentes.

En référence aux figures, on décrit un appui-tête 1 de siège de véhicule automobile, ledit appui-tête comprenant :
- deux tiges 2 parallèles de liaison au siège destinées à être montées en haut de dossier dudit siège, au moins l'une - et en particulier les deux dans la réalisation représentée - desdites tiges étant pourvue de crans 3 de verrouillage,
- un boitier 4 en matériau plastique moulé d'absorption d'énergie en cas de choc de la tête d'un passager sur ledit appui-tête, ledit boitier étant moulé d'une pièce, ledit boitier comprenant deux conduits 5 de réception desdites tiges en coulissement,
- un coussin, non représenté, d'habillage dudit boitier pour recevoir en appui la tête d'un passager,
- deux jeux 6 de paliers comprenant chacun un palier haut 7 et un palier bas 8, chacun desdits jeux étant monté dans un conduit 5 respectif par emboitement desdits paliers dans des logements 9 prévus dans ledit boitier, lesdits logements étant agencés de manière à permettre un débattement transversal desdits paliers de part et d'autre d'une position nominale, lesdits paliers étant pourvus d'un orifice 10 de réception en coulissement de la tige 2 correspondante,
- un dispositif de verrouillage 11 dudit boitier par rapport auxdites tiges selon une pluralité de positions verticales, de manière à permettre un réglage en hauteur dudit coussin, ledit dispositif comprenant au moins une - deux dans la réalisation représentée - saillie 12 de verrouillage montée mobile par rapport audit boitier entre une position de verrouillage, où ladite saillie s'insère dans un desdits crans, et une position de déverrouillage, où ladite saillie se retire dudit cran afin de libérer la coulissement de la tige correspondante,
lesdites tiges étant parties d'une armature 13 à base d'un tube métallique replié en forme générale de U renversé, lesdites tiges correspondant aux branches du U.

Selon la réalisation représentée, les crans 3 de verrouillage sont sous forme d'encoches débouchant vers l'avant.

Selon la réalisation représentée, les deux tiges 2 sont pourvues de crans 3 de verrouillage, le dispositif de verrouillage 11 comprenant une traverse 14 montée en coulissement transversal dans le boitier 4, ladite traverse comprenant deux saillies 12 de verrouillage, ladite traverse étant pourvue sur une de ses extrémités d'un bouton 15 poussoir permettant de l'actionner depuis une position de verrouillage, où lesdites saillies s'insèrent chacune dans un cran 3 de tige 2 correspondante, vers une position de déverrouillage, où lesdites saillies se retirent desdits crans, ledit appui-tête étant en outre pourvu d'un ressort 16 - ici à deux branches permettant un actionnement dudit bouton avec un effort constant - de rappel de ladite traverse vers sa position de verrouillage.

Selon une réalisation, les orifices 10 des paliers 7,8 présentent une forme oblongue dans le sens longitudinal, de manière à permettre un débattement longitudinal des tiges 2 dans lesdits orifices.

On évite ainsi un risque de blocage du coulissement des tiges 2 du fait de dispersions dimensionnelles et/ou de variations de température faisant varier les dimensions du boitier 4.

Selon une réalisation, les logements 9 de réception des paliers 7,8 sont agencés de manière à empêcher un débattement longitudinal et vertical desdits paliers.

Un tel agencement permet d'éviter des vibrations non voulues selon les directions longitudinale et verticale.

Selon une réalisation, les paliers 7,8 sont en matériau plastique moulé renforcé par une lame métallique.

## Revendications

1. Appui-tête (1) de siège de véhicule automobile, ledit appui-tête comprenant :
• deux tiges (2) parallèles de liaison au siège destinées à être montées en haut de dossier dudit siège, au moins l'une desdites tiges étant pourvue de crans (3) de verrouillage,
• un boitier (4) en matériau plastique moulé d'absorption d'énergie en cas de choc de la tête d'un passager sur ledit appui-tête,
• un coussin d'habillage dudit boitier pour recevoir en appui la tête d'un passager,
• deux jeux (6) de paliers comprenant chacun un palier haut (7) et un palier bas (8), ledit appui-tête étant **caractérisé en ce que** ledit boîtier est moulé d'une pièce, ledit boîtier comprenant deux conduits (5) de réception desdites tiges en coulissement, **en ce que** chacun desdits jeux est monté dans un conduit (5) respectif par emboitement desdits paliers dans des logements (9) prévus dans ledit boitier, lesdits logements étant agencés de manière à permettre un débattement transversal desdits paliers de part et d'autre d'une position nominale, lesdits paliers étant pourvus d'un orifice (10) de réception en coulissement de la tige (2) correspondante,
• **en ce qu'**il comprend en outre un dispositif de verrouillage (11) dudit boitier par rapport auxdites tiges selon une pluralité de positions verticales, de manière à permettre un réglage en hauteur dudit coussin, ledit dispositif comprenant au moins une saillie (12) de verrouillage montée mobile par rapport audit boitier entre une position de verrouillage, où ladite saillie s'insère dans un desdits crans, et une position de déverrouillage, où ladite saillie se retire dudit cran afin de libérer la coulissement de la tige correspondante,
ledit appui-tête étant **caractérisé en outre en ce que** lesdites tiges sont parties d'une armature (13) à base d'un tube métallique replié en forme générale de U renversé, lesdites tiges correspondant aux branches du U.

2. Appui-tête selon la revendication 1, **caractérisé en ce que** les crans (3) de verrouillage sont sous forme d'encoches débouchant vers l'avant.

3. Appui-tête selon l'une des revendications 1 ou 2, **caractérisé en ce que** les deux tiges (2) sont pourvues de crans (3) de verrouillage, le dispositif de verrouillage (11) comprenant une traverse (14) montée en coulissement transversal dans le boitier, ladite traverse comprenant deux saillies (12) de verrouillage, ladite traverse étant pourvue sur une de ses extrémités d'un bouton poussoir (15) permettant de l'actionner depuis une position de verrouillage, où lesdites saillies s'insèrent chacune dans un cran (3) de tige (2) correspondante, vers une position de déverrouillage, où lesdites saillies se retirent desdits crans, ledit appui-tête étant en outre pourvu d'un ressort (16) de rappel de ladite traverse vers sa position de verrouillage.

4. Appui-tête selon l'une quelconque des revendications 1 à 3, **caractérisé en ce que** les orifices (10) des paliers (7,8) présentent une forme oblongue dans le sens longitudinal, de manière à permettre un débattement longitudinal des tiges (2) dans lesdits orifices.

5. Appui-tête selon l'une quelconque des revendications 1 à 4, **caractérisé en ce que** les logements (9) de réception des paliers (7,8) sont agencés de manière à empêcher un débattement longitudinal et vertical desdits paliers.

6. Appui-tête selon l'une quelconque des revendications 1 à 5, **caractérisé en ce que** les paliers (7,8) sont en matériau plastique moulé renforcé par une lame métallique.

## Patentansprüche

1. Kopfstütze (1) für einen Kraftfahrzeugsitz, wobei die Kopfstütze Folgendes umfasst:
• zwei parallele Stäbe (2) zur Verbindung mit dem Sitz, die dazu bestimmt sind, oben an der Rückenlehne des Sitzes montiert zu werden, wobei mindestens einer der Stäbe mit Rasten (3) zum Verriegeln versehen ist,
• ein Gehäuse (4) aus geformtem Kunststoffmaterial, zum Absorbieren von Energie im Falle eines Aufpralls des Kopfes eines Fahrgastes auf die Kopfstütze,
• ein Kissen zum Verkleiden des Gehäuses zum anliegenden Aufnehmen des Kopfes eines Fahrgastes,
• zwei Lagersätze (6), jeweils ein oberes Lager (7) und ein unteres Lager (8) umfassend, wobei die Kopfstütze **dadurch gekennzeichnet ist, dass** das Gehäuse aus einem Stück geformt ist, wobei das Gehäuse zwei Kanäle (5) zur gleitenden Aufnahme der Stäbe umfasst, und dadurch, dass jeder der Sätze in einem jeweiligen Kanal (5) durch Einstecken der Lager in die in dem Gehäuse vorgesehenen Aufnahmen (9) montiert ist, wobei die Aufnahmen angeordnet sind, um einen Querausschlag der Lager beiderseits einer nominalen Position zu erlauben, wobei die Lager mit einer Öffnung (10) zur gleitenden Aufnahme des entsprechenden Stabs (2) versehen sind,
• dadurch, dass sie weiter eine Verriegelungsvorrichtung (11) des Gehäuses in Bezug auf die Stäbe entsprechend einer Vielzahl vertikaler Positionen umfasst, um eine Höheneinstellung des Kissens zu erlauben, wobei die Vorrichtung mindestens einen Vorsprung (12) zum Verriegeln umfasst, der in Bezug auf das Gehäuse zwischen einer Verrieglungsposition, in der der Vorsprung in eine der Rasten eingeführt wird, und einer Freigabeposition beweglich montiert ist, in der sich der Vorsprung aus der Raste zurückzieht, um das Gleiten des entsprechenden Stabs freizugeben,
wobei die Kopfstütze weiter **dadurch gekennzeichnet ist, dass** die Stäbe aus einer Armatur (13) auf Basis eines Metallrohres hervorgehen, das in einer im Allgemeinen umgekehrten U-Form gebogen ist, wobei die Stäbe den Schenkeln des U entsprechen.

2. Kopfstütze nach Anspruch 1, **dadurch gekennzeichnet, dass** die Rasten (3) zum Verriegeln in Form von Kerben sind, die nach vorne münden.

3. Kopfstütze nach einem der Ansprüche 1 oder 2, **dadurch gekennzeichnet, dass** die beiden Stäbe (2) mit Rasten (3) zum Verriegeln versehen sind, wobei die Verriegelungsvorrichtung (11) eine Traverse (14) umfasst, die in Querrichtung gleitend in dem Gehäuse montiert ist, wobei die Traverse zwei Verriegelungsvorsprünge (12) umfasst, wobei die Traverse an einem ihrer Enden mit einem Druckknopf (15) versehen ist, der es ermöglicht, sie aus einer Verriegelungsposition, in der die Vorsprünge jeweils in eine Raste (3) eines entsprechenden Stabs (2) eingreifen, in eine Freigabeposition zu betätigen, in der sich die Vorsprünge aus den Rasten zurückziehen, wobei die Kopfstütze weiter mit einer Rückstellfeder (16) der Traverse in ihre Verriegelungsposition versehen ist.

4. Kopfstütze nach einem der Ansprüche 1 bis 3, **dadurch gekennzeichnet, dass** die Öffnungen (10) der Lager (7, 8) eine längliche Form in der Längsrichtung aufweisen, um einen Längsausschlag der Stäbe (2) in den Öffnungen zu erlauben.

5. Kopfstütze nach einem der Ansprüche 1 bis 4, **dadurch gekennzeichnet, dass** die Aufnahmen (9) zur Aufnahme der Lager (7, 8) angeordnet sind, um einen Längs- und Vertikalausschlag der Lager zu verhindern.

6. Kopfstütze nach einem der Ansprüche 1 bis 5, **dadurch gekennzeichnet, dass** die Lager (7, 8) aus durch eine Metallklinge verstärktem geformtem Kunststoffmaterial sind.

## Claims

1. Headrest (1) for a motor vehicle seat, said headrest comprising:
• two parallel rods (2) for connecting to the seat intended to be mounted at the top of the back of said seat, at least one of said rods being provided with locking detents (3),
• a moulded plastic housing (4) for absorbing energy in the event of impact of a passenger's head on said headrest,
• a lining pad of said housing to receive in support the passenger's head,
• two sets (6) of bearings each comprising a top bearing (7) and a bottom bearing (8),said headrest being **characterised in that** said housing is moulded in one piece, said housing comprising two channels (5) for receiving said sliding rods, **in that** each of said sets is mounted in a respective channel (5) by fitting said bearings into receptacles (9) provided in said housing, said receptacles being arranged so as to enable transverse travel of said bearings on either side of a nominal position, said bearings being provided with an opening (10) for receiving the corresponding sliding rod (2), **in that** it further comprises a locking device (11) for locking said housing relative to said rods in a plurality of vertical positions, so as to enable height adjustment of said pad, said device comprising at least one locking projection (12) movably mounted relative to said housing between a locking position, where said projection is inserted into one of said detents, and an unlocking position, where said projection is removed from said detent so as to release the sliding of the corresponding rod,
said headrest being further **characterised in that** the rods are part of a frame (13) formed by a metal tube bent to take the general shape of an inverted U, the rods corresponding to the legs of the U.

2. Headrest according to claim 1, **characterised in that** the locking detents (3) are in the form of notches opening to the front.

3. Headrest according to one of claims 1 or 2, **characterised in that** the two rods (2) are provided with locking detents (3), the locking device (11) comprising a cross-member (14) mounted by transversal sliding in the housing, said cross-member comprising two locking projections (12), said cross-member being provided on one of the ends thereof with a push-button (15) suitable for actuating same from a locking position, where said projections are each inserted into a detent (3) of the corresponding rod (2), to an unlocking position, where said projections are removed from said detents, said headrest being further provided with a spring (16) for returning said cross-member to the locking position thereof.

4. Headrest according to any one of claims 1 to 3, **characterised in that** the openings (10) of the bearings (7,8) have an oblong shape in the longitudinal direction, so as to enable longitudinal travel of the rods (2) in said openings.

5. Headrest according to any one of claims 1 to 4, **characterised in that** the receptacles (9) for receiving the bearings (7,8) are arranged so to prevent longitudinal and vertical travel of said bearings.

6. Headrest according to any one of claims 1 to 5, **characterised in that** the bearings (7,8) are made of moulded plastic reinforced with a metal strip.
